# EUROPEAN PATENT APPLICATION

(11) **EP 2 169 863 A1**
(43) Date of publication of application: **31.03.2010**
(21) Application number: 08776718.2
(22) Date of filing: 18.06.2008
(51) Int. Cl.: H04J 11/00, H04B 7/02, H04B 7/08, H04Q 7/38

(54) **RADIO COMMUNICATION DEVICE AND SYMBOL ARRANGEMENT METHOD**

(30) Priority: 19.06.2007 JP 2007161968
(71) Applicant: Panasonic Corporation, Kadoma-shi Osaka 571-8501 (JP)
(72) Inventor: KIMURA, Ryohei, Osaka 540-6207 (JP); HOSHINO, Masayuki, Osaka 540-6207 (JP); YUDA, Yasuaki, Osaka 540-6207 (JP)
(74) Representative: Grünecker, Kinkeldey, Stockmair & Schwanhäusser Anwaltssozietät
(86) International application number: PCT/JP2008/001565
(87) International publication number: WO 2008/155908

(57) **Abstract**

Provided is a radio communication device which can reduce the affect of CDD channel fluctuation of an interference signal from other cell when using a CDD. In this device, an arrangement unit (105) arranges some of the symbols inputted from a repetition unit (104) in a subcarrier positioned at the top portion of the CDD channel fluctuation of the LD-CDD and arranges the other symbols in a subcarrier at the bottom portion of the CDD channel fluctuation of the LD-CDD. A cyclic delay unit (106-1) and a cyclic delay unit (106-2) supply different cyclic delays to the respective symbols arranged in a plurality of subcarriers among signals inputted from the arrangement unit (105) according to the CDD mode inputted from a transmission parameter control unit (101).

## Description

### Technical Field

The present invention relates to a radio communication apparatus and a symbol mapping method.

### Background Art

In recent years, transmission techniques for realizing high speed and high capacity data transmission have been studied and a MIMO (Multi Input Multi Output) transmission technique using a plurality of antennas has been the focus of attention. In MIMO transmission, by providing a plurality of antennas both on the transmission side and the receiving side, by preparing a plurality of channels in space between radio transmission and radio reception and by spatially multiplexing the channels, it is possible to increase throughput.

Further, studies are conducted for the cyclic delay diversity (CDD, see non-patent document 1) technique as a peripheral technique in MIMO transmission, whereby, b y transmitting signals to which different cyclic delays are given on a per antenna basis from a plurality of antennas at the same time, the number of delay paths increases equally, to improve the selectivity of a fading channel. Furthermore, CDD has two CDD modes, SD-CDD (Small Delay CDD), in which the amount of cyclic delay is small, and LD-CD (Large Delay CDD), in which the amount of cyclic delay is large.

With SD-CDD of a small amount of cyclic delay, fading channel fluctuation is moderate over all resource blocks (RBs). Accordingly, with SD-CDD, it is possible to acquire great frequency scheduling gain and provide the maximum multiuser diversity effect. SD-CDD is suitable for data communication when a radio communication mobile station apparatus (hereinafter "mobile station") moves slow. By contrast with this, with LD-CDD of a large amount of cyclic delay, fading channel fluctuation increases in an RB, so that it is possible to provide great frequency diversity gain. LD-CDD is an effective scheme for situations in which frequency scheduling transmission is difficult to apply.

Further, there is a link adaptation technique as a peripheral technique in MIMO transmission. A link adaptation technique refers to adaptively controlling an MCS (Modulation and Coding Scheme) level showing a coding rate and a modulation scheme according to channel quality of channels between transmission and reception. In cases where a link adaptation technique is applied to mobile communication systems, mobile stations measure the SINRs (Signal to Interference and Noise Ratios) of a common reference signal and calculate average SINRs on a per RB basis from the measured SINRs. Then, the mobile stations determine the MCS levels the mobile stations use, using the average SINRs on a per RB basis. Then, the mobile stations report the MCS levels to a radio communication base station apparatus (hereinafter, "base station"). Based on the MCS levels from the mobile stations, the base station encodes and modulates transmission data, and transmits the encoded and modulated data to the mobile stations.
Non-Patent Document 1: 3GPP RAN WG1 LTE Adhoc meeting (2006.01) R1-060011 "Cyclic Shift Diversity for E-UTRA DL Control Channels & TP"

### Disclosure of Invention

### Problems to be Solved by the Invention

As described above, then, the MCS levels the mobile stations use are determined using the average SINRs per RB. For this reason, to use a determined MCS level for a plurality of subcarriers in an RB properly, it is preferable that all a plurality of subcarriers within an RB have the same SINRs as the average SINR. That is, it is preferable that the SINRs of a plurality of subcarriers in an RB are equal. For this reason, SD-CDD, in which fluctuation of a fading channel by CDD (hereinafter "CDD channel") is constant and which can obtain uniform SINRs between subcarriers, is an effective scheme for a link adaptation technique.

However, when the CDD mode of an interference signal from other cells is LD-CDD, the interference power of the subcarriers varies based on CDD fluctuation period in LD-CDD. For this reason, when a desired signal is transmitted from the base station with SD-CDD, in a mobile station, the SINRs of subcarriers in an RB vary based on a period of CDD channel fluctuation in LD-CDD from other cells, and, as a result, significant differences are produced between the SINRs of subcarriers in an RB. Accordingly, when the CDD mode of an interference signal from other cells is LD-CDD, it is not possible to perform adequate link adaptation.

Therefore, in the base station, to keep the SINRs of a plurality of subcarriers in an RB uniform, it is necessary to reduce the influence of CDD channel fluctuations with interference signals from other cells.

It is therefore an object of the present invention to provide a radio communication apparatus and symbol mapping method that can reduce the influence of CDD channel fluctuations with interference signals from other cells when using CDD.

### Means for Solving the Problem

The radio communication apparatus of the present invention provides a base station that transmits a multicarrier signal formed with a plurality of subcarriers with cyclic delay diversity, and adopts a configuration including: a mapping section that maps, in the plurality of subcarriers, part of a plurality of identical symbols to first subcarriers located at peak parts in channel fluctuation in large delay cyclic delay diversity and maps the rest of the plurality of identical symbols to second subcarriers located at valley parts in the channel fluctuation; and a transmitting section that transmits the multicarrier signal in which the plurality of identical symbols are mapped to the plurality of subcarriers.

### Advantageous Effects of Invention

According to the present invention, it is possible to reduce the influence of CDD channel fluctuations an interference signal from other cells when CDD is used.

### Brief Description of Drawings

FIG.1 is a block diagram of a base station according to Embodiment 1 of the present invention;
FIG.2 illustrates examples of changes of MCSs according to Embodiment 1 of the present invention;
FIG.3 shows a process flow of the transmission parameter control section according to Embodiment 1 of the present invention;
FIG.4 shows symbol mapping according to Embodiment 1 of the present invention;
FIG.5 is a block diagram of a mobile station according to Embodiment 1 of the present invention;
FIG.6 shows symbol combining process according to Embodiment 1 of the present invention;
FIG.7 shows symbol mapping according to Embodiment 2 of the present invention;
FIG.8 shows symbol mapping according to Embodiment 2 of the present invention;
FIG.9 is a block diagram of the base station according to Embodiment 2 of the present invention;
FIG.10 is a block diagram of the mobile station according to Embodiment 2 of the present invention;
FIG. 11A shows symbol mapping (mapping example 1: the number of samples of cyclic delay shift N/3), according to Embodiment 2 of the present invention;
FIG.11B shows symbol mapping (mapping example 1: the number of samples of cyclic delay shift N/4), according to Embodiment 2 of the present invention;
FIG.12A shows symbol mapping (mapping example 2: upon a second transmission), according to Embodiment 2 of the present invention;
FIG.12B shows symbol mapping (mapping example 2: upon a third transmission), according to Embodiment 2 of the present invention; and
FIG.12C shows symbol mapping (mapping example 2: upon a fourth transmission), according to Embodiment 2 of the present invention.

### Best Mode for Carrying Out the Invention

Now, embodiments of the present invention will be described in detail with reference to the accompanying drawings. In the following description, the radio communication apparatus on the transmitting side is a base station and the radio communication apparatus on the receiving side is a mobile station. Further, in the following description, the CDD mode of a desired signal the base station transmits is SD-CDD, and the CDD mode of interference signals from other cells is LD-CDD.

### (Embodiment 1)

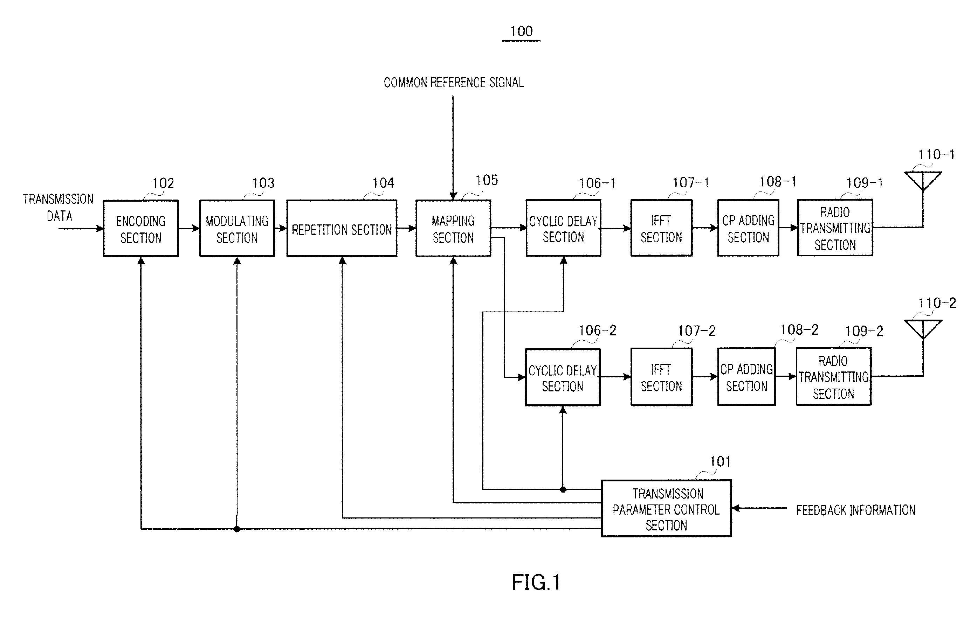

FIG.1 shows the configuration of base station 100 according to the present embodiment.

In base station 100 shown in FIG.1, based on feedback information from a mobile station, transmission parameter control section 101 controls an MCS level (a coding rate and a modulation scheme) for transmission data (desired signal) to each mobile station, a repetition factor (RF) and a CDD mode (SD-CDD or LD-CDD) for transmission data to each mobile station. Here, the feedback information from the mobile station include an MCS level determined based on an SINR of a received signal in the mobile station, the CDD mode of transmission data for the mobile station and the CDD mode of an interference signal from other cells. When the CDD mode of an interference signal from other cells is LD-CDD, transmission parameter control section 101 determines an RF based on the number of samples of cyclic delay shift in LD-CDD, that is, based on the CDD channel fluctuation period in LD-CDD. Further, to prevent a data rate from decreasing due to repetition, transmission parameter control section 101 changes the MCS level such that the MCS level increases according to the determined RF. Meanwhile, when the CDD mode of an interference signal from other cells is SD-CDD, transmission parameter control section 101 neither determine the RF nor change the MCS level. Then, transmission parameter control section 101 generates a control signal designating the MCS level after the control, the determined RF and the CDD mode of transmission data for the mobile station. Then, transmission parameter control section 101 outputs the MCS after the control to encoding section 102 and modulating section 103, the determined RF to repetition section 104, the control signal to mapping section 105, and the CDD mode of transmission data for mobile stations to cyclic delay sections 106-1 and 106-2. The details of control process in transmission parameter control section 101 will be described later.

Encoding section 102 encodes transmission data according to the coding rate received as input from transmission parameter control section 101. Then, encoding section 102 outputs the encoded transmission data to modulating section 103.

Modulating section 103 modulates the encoded transmission data received as input from encoding section 102, according to the modulation scheme received as input from transmission parameter selecting section 101, to generate a data symbol. Then, modulating section 103 outputs the generated data symbol to repetition section 104.

Repetition section 104 repeats the data symbol received as input from modulating section 103 according to the RF received as input from transmission parameter control section 101. For example, if RF = 2, repetition section 104 acquires two identical symbols by repeating a data symbol. Then, repetition section 104 outputs a plurality of identical symbols formed with data symbols and repetition symbols to mapping section 105.

Mapping section 105 multiplexes a common reference signal, the control signal received as input from transmission parameter control section 101 and a plurality of identical symbols received as input from repetition section 104, and maps the signal after multiplexing to a plurality of subcarriers. At this time, mapping section 105 maps part of a plurality of identical symbols to subcarriers located at the peak parts in the CDD channel fluctuation of LD-CDD, and maps the rest of the symbols to subcarriers located at the valley parts in the CDD channel fluctuation of LD-CDD. Then, mapping section 105 outputs the multiplexed signals to cyclic delay sections 106-1 and 106-2, respectively. The details of mapping process in mapping section 105 will be described later.

Cyclic delay section 106-1, IFFT (Inverse Fast Fourier Transform) section 107-1, CP adding section 108-1 and radio transmitting section 109-1 are provided corresponding to antenna 110-1. Also, Cyclic delay section 106-2, IFFT section 107-2, CP adding section 108-2 and radio transmitting section 109-2 are provided corresponding to antenna 110-2.

Cyclic delay sections 106-1 and 106-2 give different cyclic delays to the symbols mapped to a plurality of subcarriers, in the multiplexed signals received as input from mapping section 105, according to the CDD mode received as input from transmission parameter control section 101. To be more specific, the CDD mode received as input from transmission parameter control section 101 is SD-CDD, so that cyclic delay section 106-1 does not give a cyclic delay to the symbols and cyclic delay section 106-2 gives a cyclic delay in the number of samples of cyclic delay shift in SD-CDD to the symbols. Then, cyclic delay sections 106-1 and 106-2 output the signals given delays to IFFT sections 107-1 and 107-2, respectively.

IFFT sections 107-1 and 107-2 perform an IFFT for subcarriers to which the signals given delays received as input from cyclic delay sections 106-1 and 106-2 are mapped, and transform the frequency domain signals to time domain signals, to generate OFDM symbols. Then, IFFT sections 107-1 and 107-2 output the OFDM symbols to CP adding sections 108-1 and 108-2, respectively.

CP adding sections 108-1 and 108-2 add the same signal as the tail part of the OFDM symbols, to the beginning of those OFDM symbols, as a CP. Then, CP adding sections 108-1 and 108-2 output the OFDM symbols after addition of a CP to radio transmitting sections 109-1 and 109-2, respectively.

Radio transmitting sections 109-1 and 109-2 perform transmitting processing including D/A conversion, amplification and up-conversion on the OFDM symbols after the addition of a CP, and transmit the OFDM symbols after transmitting processing from antennas 110-1 and 110-2 at the same time. By this means, a plurality of OFDM symbols are transmitted from a plurality of antennas using CDD.

Next, the details of control process in transmission parameter control section 101 will be described.

Transmission parameter control section 101 determines an RF based on the number of samples of cyclic delay shift of LD-CDD in an interference signal from other cells. To be more specific, transmission parameter control section 101 sets an RF with the number of subcarriers corresponding to the frequency interval of one CDD channel fluctuation period in LD-CDD. For example, when the number of samples of cyclic delay shift is N/2, the number of subcarriers corresponding to the frequency interval of one CDD channel fluctuation period in LD-CDD is two, so that transmission parameter control section 101 determines that the RF is two. Similarly, when the number of samples of cyclic delay shift is N/4 (i.e. the number of subcarriers corresponding to the frequency interval of one CDD channel fluctuation period in LD-CDD is four), transmission parameter control section 101 determines that the RF is four. When the number of samples of cyclic delay shift is N/8 (i.e. the number of subcarriers corresponding to the frequency interval of one CDD channel fluctuation period in LD-CDD is eight), transmission parameter control section 101 determines that the RF is eight. Here, N is the number of FFT (Fast Fourier Transform) points. Further, when the CDD mode of interference signals from other cells is SD-CDD, transmission parameter control section 101 does not set the RF.

Next, transmission parameter control section 101 increases the MCS level included in feedback information according to the determined RF, that is, according to the number of subcarriers corresponding to the frequency interval of one CDD channel fluctuation period in LD-CDD. Here, in cases where transmission data is repeated in RF = 2, two identical symbols are acquired at a time, and therefore the data rate decreases to 1/2. Then, by changing the MCS level and making the data rate twice, transmission parameter control section 101 prevents the data rate from decreasing upon data transmission.

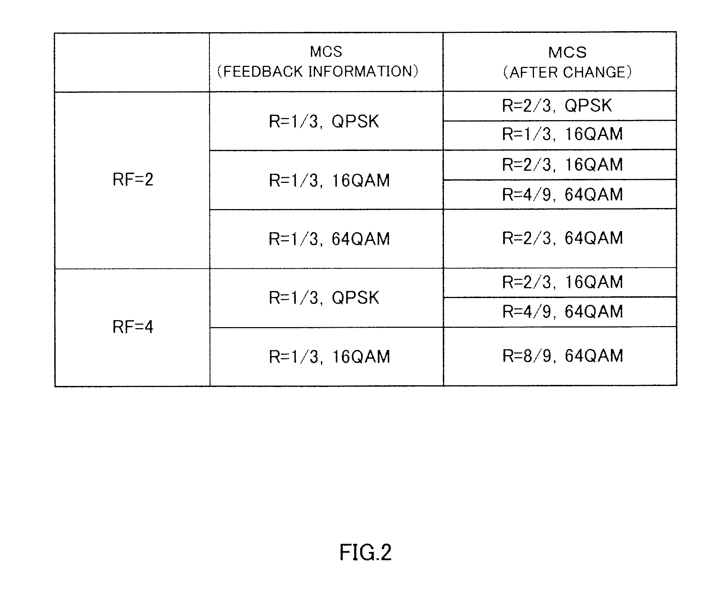

For example, as shown in FIG.2, when the RF transmission parameter control section 101 has determined is two and the MCS level included in feedback information is R=1/3 and QPSK, transmission parameter control section 101 changes the coding rate to 2/3 or changes the modulation scheme to 16 QAM. That is, transmission parameter control section 101 changes the MCS level to R=2/3 and QPSK, or to R=1/3 and 16 QAM. Here, both the data rate in the case of R=2/3 and QPSK and the data rate in the case of R=1/3 and 16 QAM are twice as high as the data rate in the case of R=1/3 and QPSK. In this way, when transmission data is repeated with RF = 2, the MCS level is changed to a level in which the data rate increases twice, it is possible to prevent the data rate from decreasing upon data transmission. As shown in FIG.2, when transmission parameter control section 101 increases the MCS level according to the RF, transmission parameter control section 101 may change either the coding rate or the modulation scheme or change both.

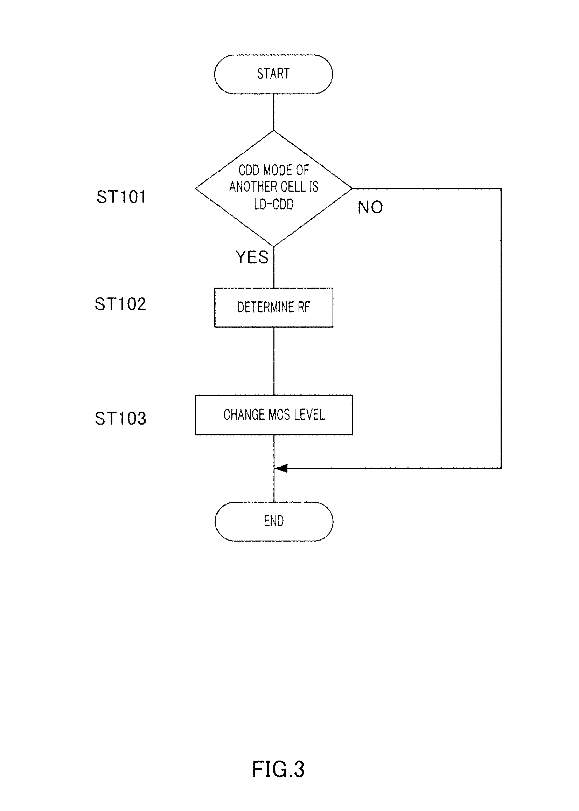

Next, the parameter change process flow of transmission parameter control section 101 will be explained using the flow chart of FIG.3.

When the CDD mode of an interference signal from other cells (CDD-mode in other cells) is LD-CDD in ST (step) 101 (ST 101: "YES"), transmission parameter control section 101 determines an RF based on the number of samples of cyclic delay shift of LD-CDD in an interference signal from other cells in ST 102.

In ST 103, transmission parameter control section 101 changes the MCS level based on the RF determined in ST 102.

Meanwhile, when the CDD mode of an interference signal from other cells is SD-CDD (ST 101: "NO"), transmission parameter control section 101 does not repeat the data symbols, and finishes the process without doing anything.

Next, the details of mapping process of data symbols in mapping section 105 will be described. Here, the RF determined in transmission parameter control section 101 is two, and the number of samples of cyclic delay shift of LD-CDD in an interference signal from other cells is N/2.

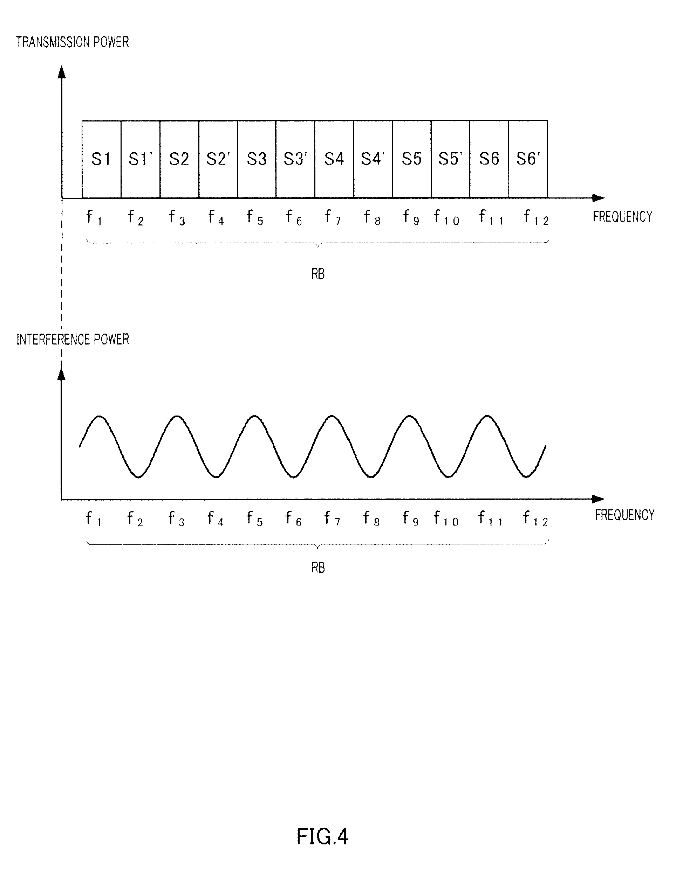

FIG.4 shows an RB formed with twelve subcarriers, f₁ to f₁₂, Here, RF=2, and therefore, as shown in FIG.4, mapping section 105 receives, as input from repetition section 104, data symbols S1 to S6 and repetition symbols S1' to S6', which are generated by repeating S1 to S6, respectively, . Here, S1 to S6 and S1' to S6' are identical symbols, respectively.

Further, the number of samples of cyclic delay shift of LD-CDD in an interference signal from other cells is N/2, and, accordingly, as shown in FIG.4, the number of subcarriers corresponding to one CDD channel fluctuation period of LD-CDD in an interference signal from other cells (i.e. fluctuation of interference power) is two. In other words, the frequency interval between subcarriers in subcarriers f₁ to f₁₂ is half a CDD channel fluctuation period of LD-CDD in an interference signal from other cells. That is, CDD channels of LD-CDD in neighboring subcarriers are antiphase each other. For example, as shown in FIG.4, f₁ is located at a peak part in the CDD channel fluctuation of LD-CDD (high interference power) and f₂ neighboring f₁ is located at a valley part in the CDD channel fluctuation of LD-CDD (low interference power).

Then, mapping section 105, maps a plurality of identical symbols equally to subcarriers located at the peak parts in the CDD channel fluctuation of LD-CDD (high interference power) and to subcarriers located at the valley parts in the CDD channel fluctuation of LD-CDD (low interference power). Here, RF = 2, so that mapping section 105 maps two identical symbols, one by one, to a subcarrier located in a peak part in the CDD channel fluctuation of LD-CDD (high interference power) and to a subcarrier located in a valley part in the CDD channel fluctuation of LD-CDD (low interference power).

To be more specific, as shown in FIG.4, mapping section 105 maps S1 to f₁ (a peak part in the CDD channel fluctuation of LD-CDD) and S1' to f₂ (a valley part in the CDD channel fluctuation of LD-CDD). That is, S1 and S1' are mapped individually to f₁, and f₂, which are antiphase in the CDD channel of LD-CDD. Similarly, mapping section 105 maps S2 to f₃ (the peak part in the CDD channel fluctuation of LD-CDD) and S2' to f₄ (the valley part in the CDD channel fluctuation of LD-CDD). The same applies to S3 to S6 and S3' to S6'.

In this way, a plurality of identical symbols are mapped, in a distributed manner, to subcarriers located at the peak parts in the CDD channel fluctuation of LD-CDD (high interference power), that is, subcarriers of poor channel quality (low SINRs), and to subcarriers located at the valley parts in the CDD channel fluctuation of LD-CDD (low interference power), that is, subcarriers of good channel quality (high SINRs). In other words, a plurality of identical symbols are mapped, in a distributed manner, to a plurality of subcarriers corresponding to the frequency interval of one CDD channel fluctuation period in LD-CDD, so that it is possible to provide diversity effect. By this means, in a plurality of subcarriers in an RB to which data symbols are mapped, it is possible to average interference power from other cells and make interference power uniform.

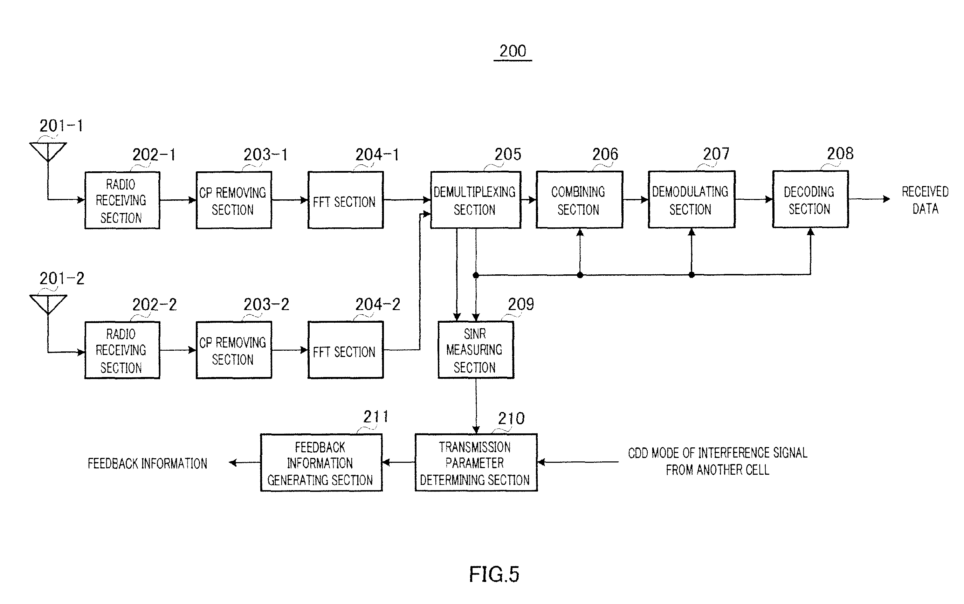

Next, FIG.5 shows the configuration of mobile station 200 according to the present embodiment.

In mobile station 200 shown in FIG.5, radio receiving section 202-1, CP removing section 203-1 and FFT section 204-1 are provided corresponding to antenna 201-1. Further, radio receiving section 202-2, CP removing section 203-2 and FFT section 204-2 are provided corresponding to antenna 201-2.

Radio receiving sections 202-1 and 202-2 receive OFDM symbols, which are multicarrier signals transmitted with CDD from base station 100 (FIG.1), via antenna 101-1 and 201-2, respectively, and perform receiving processing including down-conversion and A/D conversion on these OFDM symbols. Then, radio receiving sections 202-1 and 202-2 output the OFDM symbols after the radio receiving processing to CP removing sections 203-1 and 203-2, respectively. These OFDM symbols each include a plurality of identical symbols formed with data symbols and repetition symbols, a common reference signal and a control signal. Further, these OFDM symbols receive interference in the channel by signals from other cells.

CP removing sections 203-1 and 203-2 remove the CPs from the OFDM symbols received as input from radio receiving sections 202-1 and 202-2, respectively. Then, CP removing sections 203-1 and 203-2 output the OFDM symbols without CPs to FFT sections 204-1 and 204-2, respectively.

FFT sections 204-1 and 204-2 perform an FFT on the OFDM symbols received as input from CP removing sections 203-1 and 203-2, respectively, to transform the time domain signals to frequency domain signals. Then, FFT sections 204-1 and 204-2 output the signals after the FFT to demultiplexing section 205.

Demultiplexing section 205 demultiplexes the signals after the FFT received as input from FFT sections 204-1 and 204-2 into a plurality of identical symbols, a common reference signal and a control signal. Then, demultiplexing section 205 outputs a plurality of identical symbols to combining section 206, the common reference signal to SINR measuring section 209, and the control signal to combining section 206, demodulating section 207, decoding section 208 and SINR measuring section 209.

Combining section 206 combines a data symbol and a repetition symbols corresponding to the data symbol in a plurality of identical symbols received as input from demultiplexing section 205, to generate a combined symbol. To be more specific, combining section 206 combines a symbol mapped to a subcarrier located at a peak part in the CDD channel fluctuation of LD-CDD and a symbol mapped to a subcarrier located at a valley part in the CDD channel fluctuation of LD-CDD. Here, combining section 206 determines the number of symbols to be combined according to the RF designated by the control signal received as input from demultiplexing section 205. Then, combining section 206 outputs the generated combined symbol to demodulating section 207. The details of combining process in combining section 206 will be described later.

Demodulating section 207 demodulates the combined symbol received as input from combining section 206 based on the modulation scheme designated by the control signal received as input from demultiplexing section 205. Then, demodulating section 207 outputs the data signal after the demodulation to decoding section 208.

Decoding section 208 decodes the demodulated data signal received as input from demodulating section 207 according to the coding rate designated by the control signal received as input from demultiplexing section 205. Then, decoding section 208 outputs the data signal after the decoding as received data.

Meanwhile, SINR measuring section 209 measures the SINR of the common reference signal received as input from demultiplexing section 205 based on the CDD mode designated by the control signal received as input from demultiplexing section 205. To be more specific, SINR measuring section 209 gives a cyclic delay in the CDD mode designated by the control signal to the common reference signal, and measures an SINR of the common reference signal after the cyclic delay. In this way, in SINR measuring section 209, by giving a common reference signal the same cyclic delay as the delay given to the data signal, it is possible to reflect the influence of a CDD channel of the data signal for measurement of the SINR of the common reference signal. Then, SINR measuring section 209 outputs the measured SINR to transmission parameter determining section 210.

Transmission parameter determining section 210 determines an MCS level and a CDD mode of transmission data for the mobile station based on the SINR received as input from SINR measuring section 209. For example, transmission parameter determining section 210 determines a higher MCS when the SINR is higher. Further, for example, when the SINR is equal to or more than a threshold, transmission parameter determining section 210 determines the CDD mode of transmission data for the mobile station as a SD-CDD mode, and when the SINR is less than the threshold, transmission parameter determining section 210 determines the CDD mode of transmission data for the mobile station as a LD-CDD mode. Then, transmission parameter determining section 210 outputs the MCS level, the CDD mode of transmission data for the mobile station and the CDD mode of an interference signal from other cells received as input from a receiving section (not shown), to feedback information generating section 211.

Feedback information generating section 211 generates feedback information formed with the MCS level, the CDD mode of transmission data for the mobile station and the CDD mode of an interference signal from other cells received as input from transmission parameter determining section 210. Then, feedback information generating section 211 feeds back the generated feedback information to base station 100

Next, the details of combining process in combining section 206 will be described.

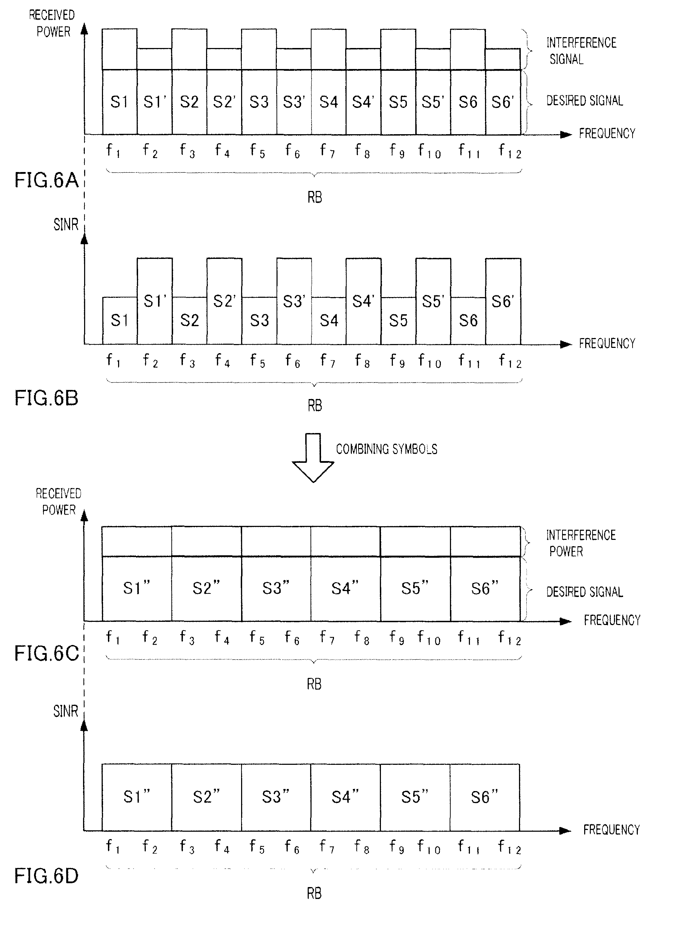

Similar to FIG.4, FIG.6 shows an RB formed with twelve subcarriers, f₁ to f₁₂. Here, the RF designated by the control signal is two. Further, as described above, identical symbols are mapped to neighboring subcarriers. Further, in a received signal before combining the symbols, the frequency interval of one CDD channel fluctuation period of LD-CDD in an interference signal from other cells (interference power) corresponds to the frequency interval of two subcarriers, similar to FIG.4. That is, fluctuation of CDD channels (interference power) in LD-CDD in the neighboring subcarriers are antiphase each other. That is, high interference power (peak part in the CDD channel fluctuation of LD-CDD) and low interference power (valley part in the CDD channel fluctuation of LD-CDD) appear every other subcarrier. Here, as shown in FIG.6A, it is assumed that the interference power of an interference signal from other cells is higher for odd-numbered subcarriers (i.e. the peak parts in the CDD channel fluctuation of LD-CDD), and the interference power is lower for even-numbered subcarriers (the valley parts in the CDD channel fluctuation of LD-CDD). Meanwhile, as shown in FIG.6A, received power of a signal from base station 100 (FIG.1), that is, desired power of transmission data transmitted with SD-CDD is fixed between subcarriers. Accordingly, the SINRs in subcarriers before combining symbols vary depending upon fluctuations of interference power from other cells. That is, as shown in FIG.6B, the SINRs of odd-numbered subcarriers are lower and the SINRs of even-numbered subcarriers are higher.

RF = 2, so that combining section 206 combines the symbols mapped to two neighboring subcarriers. To be more specific, as shown in FIG.6C, combining section 206 combines the data symbol S1 mapped to f₁ (the peak part in the CDD channel fluctuation of LD-CDD) and the repetition symbol S1' mapped to f₂ (the valley part in the CDD channel fluctuation), to generate the combined symbol S1". Similarly, combining section 206 combines S2 mapped to f₃ (a peak part in the CDD channel fluctuation in LD-CDD) and S2' mapped to f₄ (a valley part in the CDD channel fluctuation), to generate S2". The same applies to f₅ to f₁₂,

Here, the received power in f₁ and f₂, to which S1" is mapped, is an average value between the received power of f₁, to which S1 is mapped and received power of f₂, to which S1' is mapped. Accordingly, the SINR of f₁ and f₂, to which S1" is mapped, is an average value between the SINR of f₁ and the SINR of f₂ as shown in SINR characteristics after symbol combining of FIG.6. The same applies to S2" to S6". That is, as shown in FIG.6D, the SINRs of all subcarriers are averaged in the received signals after combining the symbols, so that it is possible to prevent the SINRs of subcarriers of transmission data transmitted with SD-CDD from fluctuating in the same way as CDD channel fluctuation in LD-CDD.

In this way, according to the present embodiment, a plurality of identical symbols generated by repeating transmission data are mapped, in a distributed manner, to subcarriers located at the peak parts in the CDD channel fluctuation in LD-CDD (the parts where SINRs of desired signals from the local cell are low) and subcarriers located at the valley parts in the CDD channel fluctuation in LD-CDD (the parts where SINRs of desired signals from the local cell are high). By this means, as described above, it is possible to make SINRs of all subcarriers in an RB uniform and approximate a CDD channel in SD-CDD. That is, according to the present embodiment, it is possible to reduce the influence due to the CDD channel fluctuation of LD-CDD in an interference signal from other cells even when transmission data is transmitted with SD-CDD. By this means, even when transmission data is transmitted with SD-CDD, it is possible to make SINRs of all subcarriers in an RB uniform in a mobile station, so that it is possible to improve the accuracy of link adaptation conducted in RB units.

Although, as shown in FIG.4, a case has been explained above with the present embodiment where data symbols and repetition symbols, which are generated by repeating the data symbols, are mapped to consecutive subcarriers, the data symbols and the repetition symbols are not necessarily mapped to consecutive subcarriers, and, may be mapped to subcarriers located in peak parts in the CDD channel fluctuation of LD-CDD and subcarriers located in valley parts in the CDD channel fluctuation of LD-CDD. For example, in FIG.4, either data symbols or repetition symbols are mapped to subcarriers f_{1,} f₃, f₅, f₇, f₉ and f₁₁ located at peak parts in the CDD channel fluctuation of LD-CDD, and the other symbols are mapped to subcarriers f₂, f₄, f₆, f₈, f₁₀, and f₁₂ located at the valley parts in the CDD channel fluctuation of LD-CDD.

### (Embodiment 2)

With Embodiment 1, a plurality of identical data symbols are mapped to either the peak parts or the valley parts in the CDD channel fluctuation of LD-CDD without taking into consideration of time. That is, a plurality of identical data symbols are subject to symbol combining at the same time.

However, if a plurality of identical symbols are mapped to both subcarriers located at peak parts in the CDD channel fluctuation of LD-CDD and subcarriers located at valley parts in the CDD channel fluctuation of LD-CDD, the present embodiment provides the same advantage as in Embodiment 1. That is, a plurality of identical data symbols may not be mapped to subcarriers at the same time. That is, a plurality of identical data symbols may be mapped to both peak parts and valley parts in the CDD channel fluctuation of LD-CDD in different times. Then, with the present embodiment, a plurality of identical data symbols are mapped to subcarriers located at the peak parts and subcarriers located at the valley parts in the CDD channel fluctuation of LD-CDD in different times.

First, base station 100 (FIG.1) according to the present embodiment will be explained. In base station 100 according to the present embodiment, the explanation about the same operations as in Embodiment 1 will be omitted.

Transmission parameter control section 101 holds a plurality of mapping patterns of subcarriers for data symbols. Then, transmission parameter control section 101 determines a mapping pattern from a plurality of mapping patterns, according to the number of times transmission data is transmitted. The number of transmissions is the same as the RF determined in transmission parameter control section 101. Then, transmission parameter control section 101 outputs the determined mapping pattern to mapping section 105.

Repetition section 104 outputs, to mapping section 105, data symbols received as input from modulating section 103 the same number of times of transmissions as the RF received as input from transmission parameter control section 101 in different times. Repetition section 104 may repeat data symbols the same number of times as the number of transmissions, to generate a plurality of identical data symbols, and output a plurality of generated identical data symbols to mapping section 105 in different times. Also, repetition section 104 may save data symbols temporally and output the saved data symbols to mapping section 105 in different times. Also, repetition section 104 may repeat a plurality of data symbols every transmission, to generate a plurality of identical data symbols, and output a plurality of generated identical data symbols to mapping section 105 in different times.

Mapping section 105 maps a plurality of identical data symbols received as input from repetition section 104 in different times to subcarriers according to the mapping pattern received as input from transmission parameter control section 101.

Next, the details of mapping process in mapping section 105 will be described.

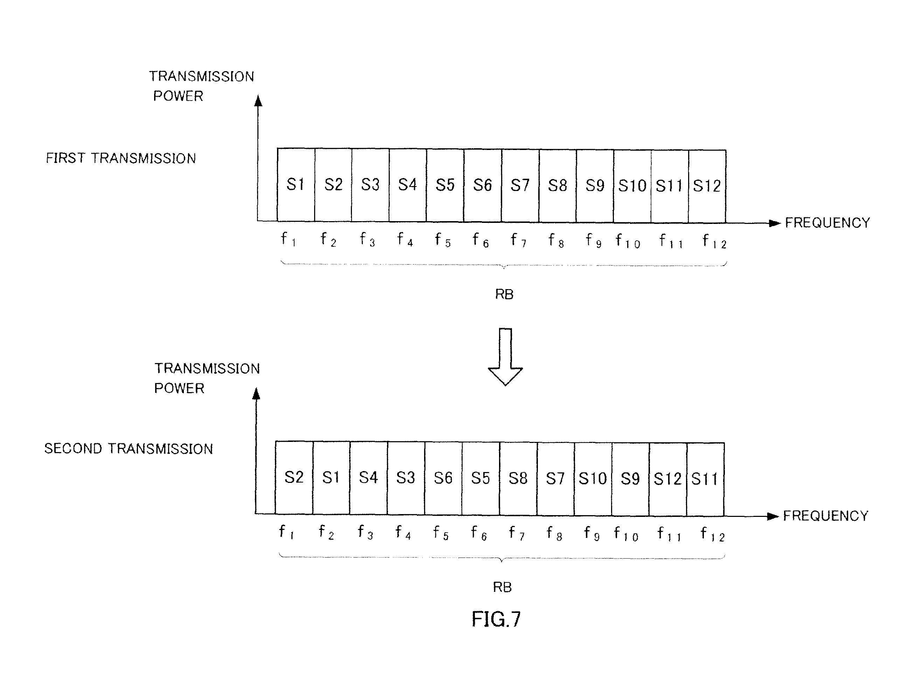

FIG.7 shows an RB formed with twelve subcarriers, f₁ to f₁₂. Here, similar to Embodiment 1, it is assumed that, among f₁ to f₁₂, odd-numbered subcarriers are located at the peak parts in the CDD channel fluctuation of LD-CDD in an interference signal from other cells (high interference power) and even-numbered subcarriers are located at the valley parts in the CDD channel fluctuation of LD-CDD in an interference signal from other cells (low interference power). Further, mapping section 105 receives data symbols S1 to S12 as input in different times from repetition section 104. Further, RF=2. That is, S1 to S12 are inputted to mapping section 105 twice.

Mapping section 105 maps data symbols, which are mapped to subcarriers located at the peak parts in the CDD channel fluctuation of LD-CDD (the valley parts in the CDD channel fluctuation of LD-CDD) upon the first transmission, to subcarriers in the valley parts in the CDD channel fluctuation of LD-CDD (the peak parts in the CDD channel fluctuation of LD-CDD) upon a second transmission.

To be more specific, mapping section 105 maps S1 to S12 to f₁ to fₗ₂ as shown in FIG.7, respectively, upon the first transmission. That is, S1, S3, S5, S7, S9 and S11 are mapped to f₁, f₃, f₅, f₇, f₉ and f₁₁, which are located at the peak parts in the CDD channel fluctuation of LD-CDD (high interference power) and S2, S4, S6, S8, S10, and S12 are mapped to subcarriers f₂, f₄, f₆, f₈, f₁₀ and f₁₂ which are located at the valley parts in the CDD channel fluctuation of LD-CDD (low interference power).

Then, as shown in FIG.7, upon a second transmission, mapping section 105 maps S2, S4, S6, S8, S10,and S12 are mapped to f₁, f₃, f₅, f₇, f₉ and f₁₁, which are located at the peak parts in the CDD channel fluctuation of LD-CDD (high interference power) and S1, S3, S5, S7, S9 and S11 are mapped to subcarriers f₂, f₄, f₆, f₈, f₁₀ and f₁₂ which are located at the valley parts in the CDD channel fluctuation of LD-CDD (low interference power).

In this way, in different times (upon the first and second transmissions), it is possible to map a plurality of identical data symbols to the peak parts or valley parts in the CDD channel fluctuation of LD-CDD as in Embodiment 1.

Next, mobile station 200 (FIG.5) according to the present embodiment will be explained. In mobile station 200 according to the present embodiment, the explanation about the same operations as in Embodiment 1 will be omitted.

Upon receiving data transmitted at the first time, combining section 206 saves data symbols received as input from demultiplexing section 205 and outputs the saved data symbols to demodulating section 207 as they are. Meanwhile, upon receiving data transmitted at a second time, combining section 206 combines a data symbol received as input from demultiplexing section 205 and the saved data symbol, to generate a combined symbol, and, saves and outputs the generated combined symbol to demodulating section 207. Here, combining section 206 holds the same mapping patterns as a plurality of mapping patterns held in transmission parameter control section 101 on base station 100 (FIG.1). Further, combining section 206 identifies mapping patterns for use in a plurality of mapping patterns based on the RF designated by the control signal received as input from demultiplexing section 205.

Next, the details of combining process in combining section 206 will be described.

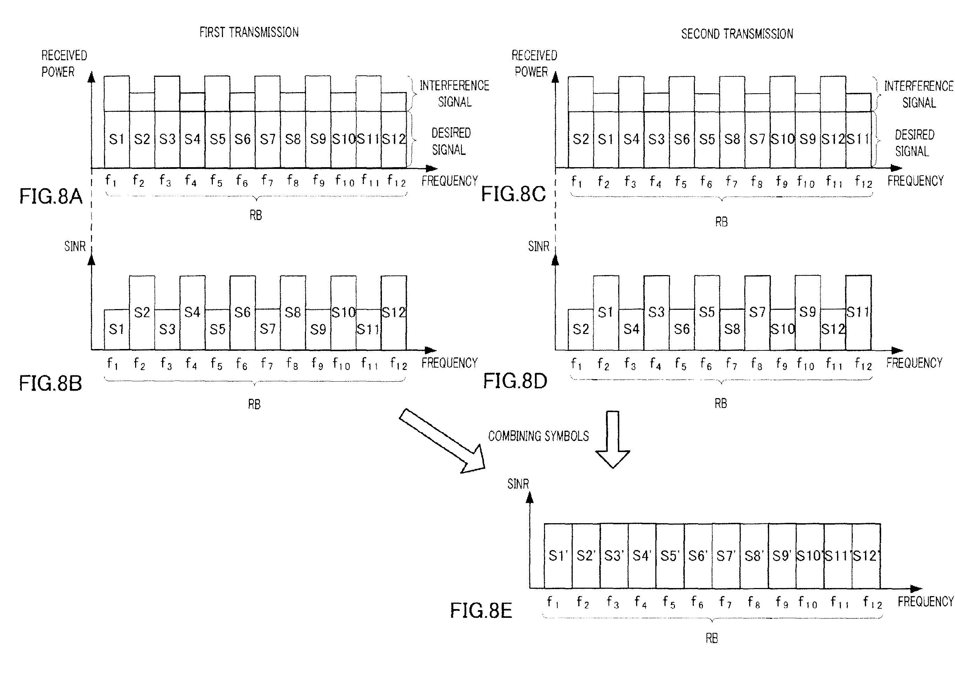

Similar to FIG.7, FIG.8 shows an RB formed with twelve subcarriers, f₁ to f₁₂. Here, high interference power (peak part in the CDD channel fluctuation of LD-CDD) and low interference power (valley part in the CDD channel fluctuation of LD-CDD) appear every other subcarrier. Further, upon receiving the first transmission data, that is, upon receiving the data transmitted at the first time shown in above FIG.7, as shown in FIG.8A, data symbols S1, S3, S5, S7, S9 and S11 are mapped to subcarriers f₁, f₃, f₅, f₇, f₉ and f₁₁, which are located at the peak parts in the CDD channel fluctuation of LD-CDD (high interference power) and S2, S4, S6, S8, S10 and S12 are mapped to subcarriers f₂, f₄, f₆, f₈, f₁₀ and f₁₂, which are located at the valley parts in the CDD channel fluctuation of LD-CDD (low interference power). That is, as shown in FIG.8B, the SINRs of odd-numbered subcarriers are lower and the SINRs of even-numbered subcarriers are higher.

Further, upon receiving the second transmission data, that is, upon receiving the data transmitted at the second time shown in above FIG.7, as shown in FIG.8C, S2, S4, S6, S8, S10 and S12 are mapped to subcarriers f₁, f₃, f₅, f₇, f₉ and f₁₁, which are located at the peak parts in the CDD channel fluctuation of LD-CDD (high interference power) and S1, S3, S5, S7, S9 and S11 are mapped to subcarriers f₂, f₄, f₆, f₈, f₁₀ and f₁₂, which are located at the valley parts in the CDD channel fluctuation of LD-CDD (low interference power). That is, as shown in FIG.8D, the SINRs of odd-numbered subcarriers are lower and the SINRs of even-numbered subcarriers are higher.

Combining section 206 combines a data symbol mapped to a subcarrier located at a peak part in the CDD channel fluctuation of LD-CDD (valley part in the CDD channel fluctuation of LD-CDD) upon receiving the first transmission data, and a data symbol mapped to a subcarrier located at a valley part in the CDD channel fluctuation of LD-CDD (peak part in the CDD channel fluctuation of LD-CDD) upon receiving the second transmission data. To be more specific, as shown in FIG.8E, combining section 206 combines S1 mapped to f₁ (a peak part in the CDD channel fluctuation of LD-CDD) in the first transmission data and S1 mapped to f₂ (a valley part in the CDD channel fluctuation of LD-CDD) in the second transmission data, to generate combined symbol S1'. Similarly, combining section 206 combines S2 mapped to f₂ (a valley part in the CDD channel fluctuation of LD-CDD) in the first transmission data and S2 mapped to f₁ (a peak part in the CDD channel fluctuation of LD-CDD) in the second transmission data, to generate combined symbol S2'. The same applies to S3 to S12 mapped to f₃ to f₁₂. By this means, combining section 206 generates combined symbols S1' to S12'.

That is, combining section 206 combines a data symbol mapped to a subcarrier located at a peak part in the CDD channel fluctuation of LD-CDD in the first transmission data (the second transmission data), that is, a data symbol mapped to a subcarrier of a low SINR, and a data symbol mapped to a subcarrier located at the valley parts in the CDD channel fluctuation of LD-CDD in the second transmission data (the first transmission data), that is, a data symbol mapped to a subcarrier of a high SINR. By this means, combining section 206 can compensate for the SINRs of data symbols of low SINRs in the first transmission data (the second transmission data) using the second transmission data. Therefore, SINRs between combined symbols acquired in a mobile station are averaged to the same level, so that, similar to Embodiment 1, it is possible to reduce the influence on transmission data transmitted with SD-CDD due to the CDD channel fluctuation in LD-CDD.

In this way, even when a plurality of identical data symbols are mapped to the peak parts and valley parts in the CDD channel fluctuation of LD-CDD in different times, the present embodiment provides the same advantage as in Embodiment 1.

A CC (Chase Combining)-based HARQ (Hybrid Automatic Repeat reQuest) is a technique of transmitting the identical data in different times. With CC-based HARQ, a mobile station feeds back an ACK (Acknowledgement) signal to a base station when there is no error in received data, and feeds back a NACK (negative Acknowledgement) signal as a response signal to the base station when there is an error . When the base station receives a NACK signal, the base station retransmits whole transmission data. Then, the mobile station combines the data retransmitted from the base station, and the data with errors received earlier and performs error correcting decoding for the combined data.

Then, next, cases will be explained as an example where the present embodiment is applied to CC-based HARQ.

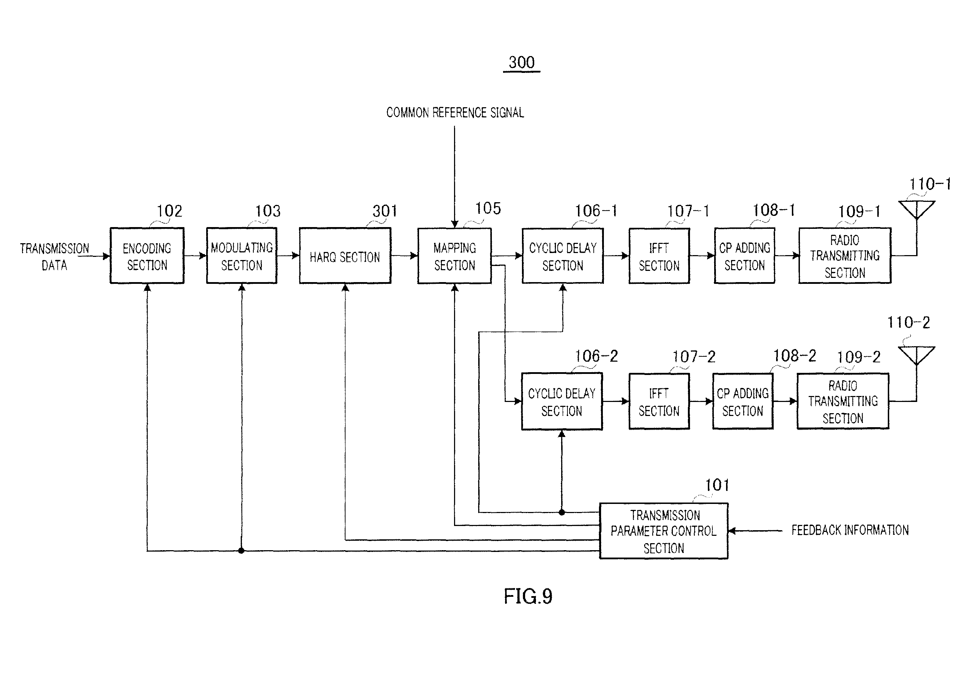

First, the base station according to the present example will be explained. FIG.9 shows the configuration of base station 300 according to the present example. In FIG.9, the same components as shown in FIG.1 will be assigned the same reference numerals, and therefore the description thereof will be omitted. Further, the explanation about the same operations as the above-described operations will be omitted.

In base station 300 in FIG.9, transmission parameter section 101 calculates the number of retransmissions from a response signal included in feedback information, and determines a subcarrier mapping pattern for data symbols based on the number of retransmissions. Then, transmission parameter control section 101 outputs the determined mapping pattern to mapping section 105. Further, transmission parameter control section 101 outputs the response signal to HARQ section 301.

HARQ section 301 saves the data symbols received as input from modulating section 103 and outputs the data symbols to mapping section 105 according to the response signal received as input from transmission parameter control section 101. To be more specific, HARQ section 301 outputs the data symbols to mapping section 105 upon the first transmission (the initial transmission). Further, when HARQ section 301 receives a NACK signal from transmission parameter control section 101, that is, upon a second transmission (i.e. the first retransmission), HARQ section 301 outputs the saved data symbols to mapping section 105. Further, when HARQ section 301 receives an ACK signal from transmission parameter control section 101, HARQ section 301 stops outputting data symbols to mapping section 105 and discards the saved data symbols.

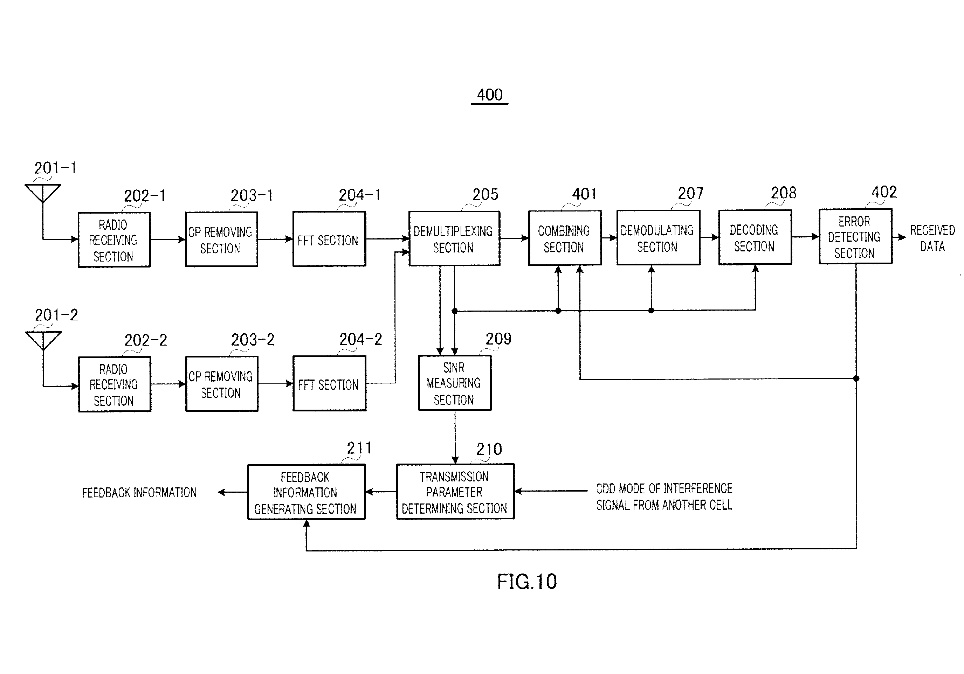

Next, a mobile station according to the present example will be explained. FIG.10 shows the configuration of mobile station 400 according to the present example. In FIG.10, the same components as shown in FIG.5 will be assigned the same reference numerals, and therefore the description thereof will be omitted. Further, the explanation about the same operations as the above-described operations will be omitted.

In mobile station 400 shown in FIG.10, upon receiving the first transmission data (initial transmission data), combining section 401 saves data symbols received as input from demultiplexing section 205 and outputs the saved data symbols to demodulating section 207 directly. Meanwhile, upon receiving second transmission data (data retransmitted at the first time), that is, upon receiving a NACK signal from error detecting section 402 (described later), combining section 401 combines a data symbol received as input from demultiplexing section 205 and the saved data symbol, to generate a combined symbol, and, saves and outputs the generated combined symbol to demodulating section 207. Further, when combining section 401 receives an ACK signal from error detecting section 402, combining section 401 discards the saved data symbol.

Error detecting section 402 detects errors with the decoded data signal received as input from decoding section 208. When there is an error with the decoded data signal as a result of the error detection, error detecting section 402 generates a NACK signal as a response signal, to output the generated NACK signal to combining section 401 and feedback information generating section 211, and, when there is no error with the decoded data signal, error detecting section 402 generates an ACK signal as a response signal, and outputs the generated ACK signal to combining section 401 and feedback information generating section 211. Further, when there is no error in the decoded data signal, error detecting section 402 outputs the decoded data signal as received data.

Feedback information generating section 211 generates feedback information using the response signal received as input from error detecting section 402.

With the present embodiment, the base station transmits a plurality of identical data symbols in different times the same number of times of transmissions as the RF. In contrast, with a CC-based HARQ, when the base station receives a NACK signal as a response signal, that is, in the case of the retransmission processing, the base station transmits identical data symbols in different times. That is, in CC-based HARQ, in cases where retransmission is processed, it is possible to provide the same advantage as in Embodiment 1.

In a CC-based HARQ, retransmission processing with the same number of retransmissions as the RF, that is, with a smaller retransmissions than the number of subcarriers corresponding to the frequency interval of one CDD channel fluctuation period in LD-CDD can be finished. That is, in a CC-based HARQ, identical data symbols cannot be mapped to all of subcarriers among subcarriers corresponding to the frequency interval of one CDD channel fluctuation period in LD-CDD.

Then, upon a second transmission (i.e. upon the first retransmission), mapping section 105 exchanges and maps data symbols mapped to subcarriers apart upon the first transmission (the initial transmission). The subcarriers are as apart as the frequency interval half the CDD channel fluctuation period in LD-CDD. Here, interference power in subcarriers half the CDD channel fluctuation period in LD-CDD apart is antiphase. By this means, by combining a data symbol mapped to subcarriers upon the first transmission (the initial transmission) and a data symbol mapped to subcarriers upon a second transmission (the first retransmission), it is possible to average the SINRs of two subcarriers definitely among the subcarriers corresponding to the frequency interval of one CDD channel fluctuation period in LD-CDD.

For example, when RF = 2, that is, if the number of subcarriers corresponding to the frequency interval of one CDD channel fluctuation period in LD-CDD is two, mapping section 105 exchanges data symbols mapped to subcarriers only one subcarrier apart upon the first transmission shown in FIG.7, that is, exchanges data symbols mapped to neighboring subcarriers, and maps the exchanged data symbols. To be more specific, mapping section 105 exchanges S1 mapped to f₁ and S2 mapped to f₂ neighboring f₁, and maps S2 to f₁ and S1 to f₂. Similarly, mapping section 105 exchanges S3 mapped to f₃ and S4 mapped to f₄ neighboring f₃, and maps S4 to f₃ and S3 to f₄. The same applies to S5 to S12 mapped to f₅ to f₁₂. By this means, the mapping pattern upon a second transmission (the first retransmission) is the same as the mapping pattern upon a second transmission shown in the above-described FIG.7. That is, it is possible to perform the symbol combining shown in FIG.8.

In this way, upon retransmission, data symbols are mapped to subcarriers corresponding to antiphase of CDD channel fluctuation of LD-CDD with subcarriers to which data symbols are mapped upon the first transmission (initial transmission). By this means, even when a data symbol is mapped to the subcarrier of the lowest SINR upon the first transmission, it is possible to map a data symbol to the subcarrier of the best SINR upon a second transmission (the first retransmission). Therefore, even when the number of retransmissions is smaller than RF, it is possible to provide the maximum reduction effect of the influence due to the CDD channel fluctuation in LD-CDD.

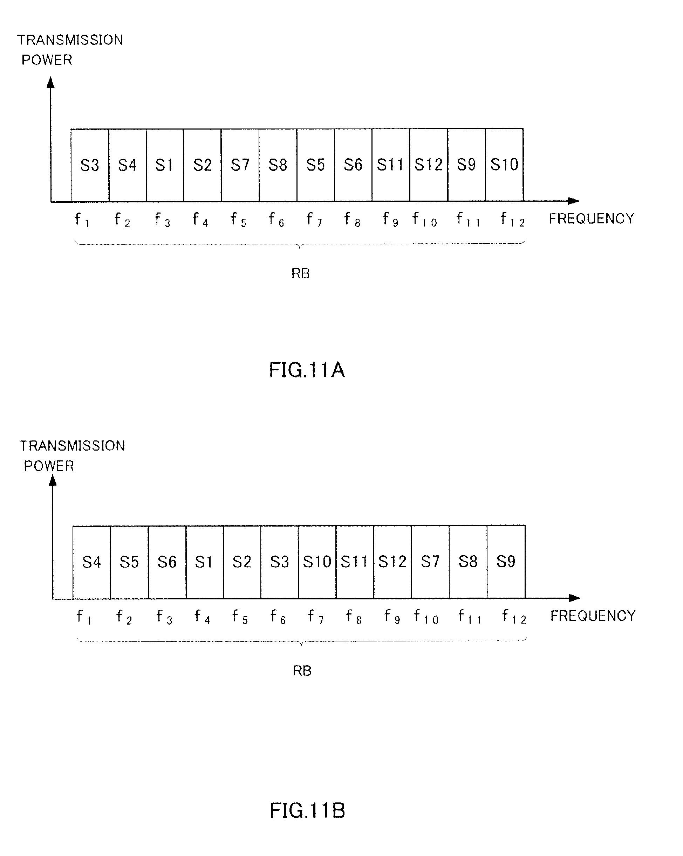

Although cases have been explained above with the present example where the number of samples of cyclic delay shift is N/2 as shown in FIG.7, when the number of samples of cyclic delay shift is N/3, that is, when the number of subcarriers corresponding to the frequency interval of one CDD channel fluctuation period in LD-CDD is three, as shown in FIG.11A, data symbols that are two subcarriers apart are exchanged upon a second transmission (the first retransmission). Further, when the number of samples of cyclic delay shift is N/4, that is, when the number of subcarriers corresponding to the frequency interval of one CDD channel fluctuation period in LD-CDD is four, as shown in FIG.11B, data symbols that are three subcarriers apart are exchanged upon a second transmission (the first retransmission).

Although, with the present example, an explanation has been given up to a second transmission (the first retransmission), in cases where transmission is made for a third time or more, the mapping pattern may be returned to the mapping pattern of the first transmission again and the mapping pattern of the first transmission and the mapping pattern of a second transmission may be used alternately.

Cases have been explained above where the present embodiment is applied to CC-based HARQ.

In this way, according to the present embodiment, in transmission data, the base station maps data symbols that are mapped to subcarriers of low SINRs (high SINRs) upon the first transmission, to subcarriers of high SINRs (low SINRs) upon a second transmission. By this means, upon receiving the second transmission data, the mobile station can improve the SINRs of the data symbols mapped to subcarriers of low SINRs upon receiving the first transmission data. By this means, it is possible to average the SINRs of all data symbols and making the SINRs a uniform level. That is, according to the present embodiment, similar to Embodiment 1, it is possible to reduce the influence due to the CDD channel fluctuation in an interference signal from other cells when CDD is used.

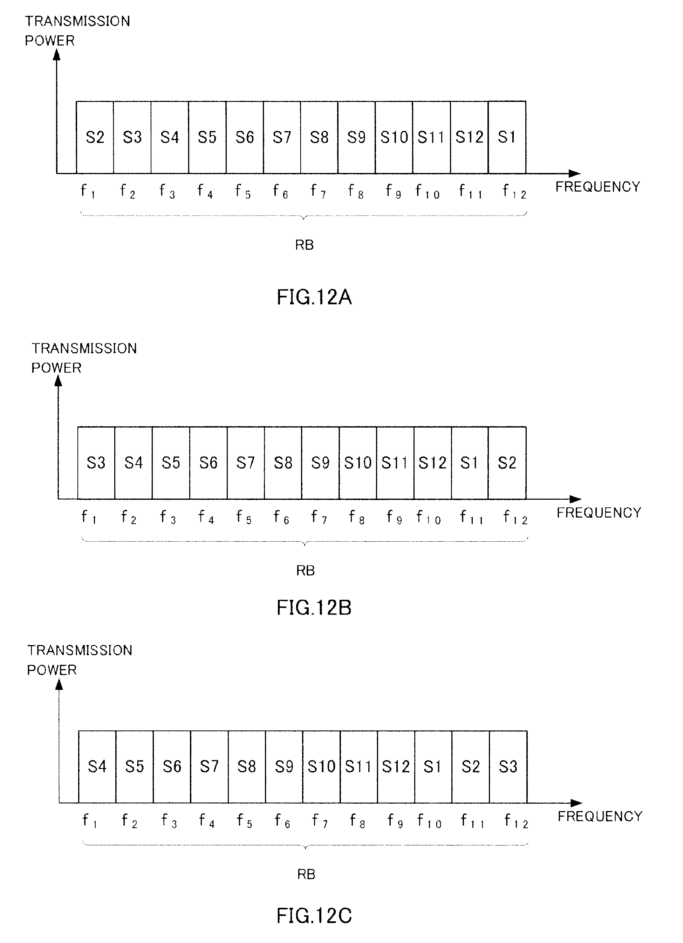

In the present embodiment, for example, as shown in FIGs.12A to 12C, the mapping patterns in which data symbols are shifted by one subcarrier every transmission. To be more specific, with respect to the mapping pattern of data symbols upon the first transmission shown in FIG.7, data symbols are shifted by one subcarrier upon a second transmission as shown in FIG.12A, shifted by two subcarriers upon a third transmission as shown in FIG.12B, and data symbols are shifted by three subcarriers upon a fourth transmission as shown in FIG.12C. By this means, data symbols are transmitted the same number of times of transmissions as the RF, in other words, data symbols are mapped to all subcarriers in a plurality of subcarriers corresponding to the frequency interval of one CDD channel fluctuation period in LD-CDD, so that it is possible to provide the same advantage as described above.

The mapping patterns shown in FIGs.12A to 12C may be used when the present embodiment is applied to CC-based HARQ. To be more specific, when the mapping pattern of data symbols upon the first transmission (initial transmission) is shown in FIG.7, the mapping pattern shown in FIG.12A may be used upon a second transmission (the first retransmission) if the number of samples of cyclic delay shift in LD-CDD is N/2, the mapping pattern shown in FIG.12B may be used of the number of samples of cyclic delay shift in LD-CDD is N/3, and the mapping pattern shown in FIG.12C may be used if the number of samples of cyclic delay shift in LD-CDD is N/4.

Further, when the present embodiment is applied to CC-based HARQ, the mapping patterns shown in FIGs.12A to 12C according to the number of retransmissions may be used. To be more specific, when the number of samples of cyclic delay shift in LD-CDD is N/2 and the mapping pattern of data symbols upon the first transmission (initial transmission) is shown in FIG.7, the mapping pattern shown in FIG.12A is used upon a second transmission (the first retransmission) . If the number of samples of cyclic delay shift in LD-CDD is N/3, in addition to the mapping patterns upon the first and second transmissions, the mapping pattern shown in FIG.12B is used upon a third transmission (the second retransmission). Then, if the number of samples of cyclic delay shift in LD-CDD is N/4, in addition to the mapping patterns upon the first to third transmissions, the mapping pattern shown in FIG.12C is used upon a fourth transmission (the third retransmission). By this means, when the number of retransmissions increases, the number of subcarriers to which the identical data symbols are mapped increases, and it is possible to provide the same advantage as the present embodiment by transmitting the same number of times of transmissions as the number of a plurality of subcarriers corresponding to the frequency interval of one CDD channel fluctuation period in LD-CDD.

The embodiments of the present invention have been explained.

With the above embodiments, a receiving section (not shown) in the mobile station receive the CDD mode of an interference signal from other cells and feed it back to the base station. However, with the present invention, the mobile station may identify the CDD mode of an interference signal from other cells using a received signal and may feed back the identified CDD mode of an interference signal from other cells to the base station. Further, the CDD mode may be reported between base stations via a radio network controller (RNC) without feeding it back to the base station via the mobile station.

Further, CDD may be referred to as "CSD (Cyclic Shift Diversity)." Further, a CP may be referred to as "GI (Guard Interval)." A subcarrier may be referred to as a "tone." Further, a base station apparatus may be referred to as a "Node B" and a mobile station apparatus may be referred to as a "UE."

Further, although, with the present embodiments, SINR is estimated as channel quality, the SNR, SIR, CINR, CNR, received power, interference power, bit error rate, packet error rate, throughput, MCS that achieves a predetermined error rate, moving speed of a mobile station, delay spread and so on may be estimated as channel quality.

For example, when the moving speed of a mobile station is estimated as channel quality, mobile station 200 (FIG.5) has a moving speed measuring section instead of SINR measuring section 209, and the moving speed measuring section measures the moving speed of mobile station 200. Then, when the moving speed of mobile station 200 is equal to or more than a threshold (that is, when the moving speed is high), transmission parameter determining section 210 (FIG.5) in mobile station 200 determines the CDD mode of transmission data for the mobile station as a LD-CDD mode, and, when the moving speed of mobile station 200 is less than the threshold (that is, when the moving speed is low), transmission parameter determining section 210 determines the CDD mode of transmission data for the mobile station as a SD-CDD mode.

Further, although, cases have been explained above with the present embodiments where, in mobile communication systems, the radio communication apparatus on the transmitting side is a base station and the radio communication apparatus on the receiving side is a mobile station, the present invention may provide the same advantage as described above by making a radio communication apparatus on the transmitting side a mobile station and the radio communication apparatus on the receiving side with a base station.

Further, although cases have been described with the above embodiment as examples where the present invention is configured by hardware, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI," or "ultra LSI" depending on differing extents of integration.

Further, the method of circuit integration is not limited to LSIs, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Application No.2007-161968, filed on June 19, 2007, including the specification, drawings and abstract, is incorporated herein by reference in its entirety

### Industrial Applicability

The present invention is applicable to, for example, mobile communication systems.

## Claims

1. A radio communication apparatus on a transmitting side that transmits a multicarrier signal formed with a plurality of subcarriers with cyclic delay diversity, the apparatus comprising:
a mapping section that maps, in the plurality of subcarriers, part of a plurality of identical symbols to first subcarriers located at peak parts in channel fluctuation in large delay cyclic delay diversity and maps the rest of the plurality of symbols to second subcarriers located at valley parts in the channel fluctuation; and
a transmitting section that transmits the multicarrier signal in which the plurality of identical symbols are mapped to the plurality of subcarriers.

2. The radio communication apparatus according to claim 1, wherein the mapping section maps the part of the plurality of identical symbols to the first subcarriers of good quality and the rest of the plurality of identical symbols to the second subcarriers of poor quality.

3. The radio communication apparatus according to claim 1, wherein the mapping section maps the plurality of identical symbols to the first subcarriers and the second subcarriers equally.

4. The radio communication apparatus according to claim 1, further comprising a control section that finds the number of subcarriers corresponding to a frequency interval of one period of the channel fluctuation,
wherein the mapping section maps the same number of the plurality of identical symbols as the number of subcarriers, to the plurality of subcarriers.

5. The radio communication apparatus according to claim 4, wherein the control section changes a modulation and coding scheme of the plurality of identical symbols according to the number of subcarriers.

6. A radio communication apparatus on a receiving side comprising:
a receiving section that receives a multicarrier signal transmitted with cyclic delay diversity; and
a combining section that combines, in a plurality of subcarriers forming the multicarrier signal, a symbol mapped to subcarrier located at a peak part in channel fluctuation in large delay cyclic delay diversity and a symbol mapped to a subcarrier located at a valley part in the channel fluctuation.

7. A symbol mapping method in a radio communication apparatus that transmits a multicarrier signal formed with a plurality of subcarriers with cyclic delay diversity, the method comprising:
in the plurality of subcarriers, mapping part of a plurality of identical symbols to first subcarriers located at peak parts in channel fluctuation in large delay cyclic delay diversity and mapping the rest of the plurality of identical symbols to second subcarriers located at valley parts in the channel fluctuation.
